# EUROPEAN PATENT APPLICATION

(11) **EP 2 026 031 A1**
(43) Date of publication of application: **18.02.2009**
(21) Application number: 08252644.3
(22) Date of filing: 07.08.2008
(51) Int. Cl.: G01B 5/20, G05B 19/02, F01D 21/00

(54) **Semi-automatic reverse engineering rotor disk inspection**

(30) Priority: 07.08.2007 US 890704
(71) Applicant: United Technologies Corporation, Hartford, CT 06101 (US)
(72) Inventor: Brooks, Robert T., Killingworth, CT 06419 (US); Nye, Wayne D., Manchester, CT 06042 (US); Oswald, Donald P., Clinton, CT 06413 (US)
(74) Representative: Tomlinson, Kerry John

(57) **Abstract**

A method of inspecting gas turbine engine rotor disks for reverse engineering includes establishing a plurality of datums for providing a local coordinate system, establishing rim face and primary rim slot data, manually verifying coordinate measuring machine probe indexing relative to probe locations on a rotor disk, programming coordinate measuring machine probing of the primary rim slot as a function of the manually verified coordinate measuring machine probe indexing along a plurality of scan lines that are substantially parallel to each other, obtaining coordinate measuring machine probing data from coordinate measuring machine probing of a plurality of sample rotor disks, outputting dimension data as a function of average values of coordinate measuring machine probing data for the plurality of sample rotor disks, and outputting tolerance data as a function of dimension data value ranges for the plurality of sample rotor disks.

## Description

### BACKGROUND

The present invention relates to reverse engineering inspection techniques.

In order to reverse engineer a component, it is generally necessary to obtain detailed information about that component in order to establish parameters for newly-manufactured components. As used herein, the term "reverse engineering" is meant to encompass the production of both slavish copies of existing components as well as copies that may incorporate one or more changes or improvements over existing components (this latter process is sometimes called "re-engineering"). Simply proceeding through data acquisition without a systematic approach for data collection may produce data that is less helpful, or may even make data collection impossible.

Conventional inspection of gas turbine engine components typically proceeds with probing of one or more sample parts using a coordinate measuring machine (CMM) program, and a comparison of that probing data to a dimensioned drawing and nominal data values. In other words, this conventional inspection of gas turbine engine components begins with a known set of engineering decisions, embodied in the dimensioned drawing and nominal data values, and CMM programming to obtain probing data proceeds on the basis of that known set of engineering decisions. This process is known in the art as actual-to-nominal best-fit inspection. In a reverse engineering context, however, a dimensioned drawing and a nominal model are typically not available. In the absence of a dimensioned drawing and nominal model to generate a CMM program, CMM operators need some guidance to be able to obtain data from existing parts to enable engineering decisions to be made as to the parameters established for newly-manufactured components.

### SUMMARY

A method of inspecting gas turbine engine rotor disks for reverse engineering includes establishing a plurality of datums for providing a local coordinate system, establishing rim face and primary rim slot data, manually verifying coordinate measuring machine probe indexing relative to probe locations on a rotor disk, programming coordinate measuring machine probing of the primary rim slot as a function of the manually verified coordinate measuring machine probe indexing along a plurality of scan lines that are substantially parallel to each other, obtaining coordinate measuring machine probing data from coordinate measuring machine probing of a plurality of sample rotor disks, outputting dimension data as a function of average values of coordinate measuring machine probing data for the plurality of sample rotor disks, and outputting tolerance data as a function of dimension data value ranges for the plurality of sample rotor disks.

### BRIEF DESCRIPTION OF THE DRAWINGS

FIG. 1 is a perspective view of a gas turbine engine rotor disk arranged for reverse engineering inspection according to the present invention.
FIGS. 2A and 2B are schematic views of alternative datum establishment procedures.
FIG. 3 is a perspective view of the gas turbine engine rotor disk shown with information for rim and slot probing.
FIGS. 4A and 4B are perspective views of a portion of the gas turbine engine rotor disk and probes, illustrating alternative probing techniques.
FIG. 5 is a perspective view of a portion of the gas turbine engine rotor disk and a probe, illustrating probed slot center information.
FIG. 6 is a perspective view of a portion of the gas turbine engine rotor disk and a probe, illustrating slot line scans.
FIG. 7 is a flow chart illustrating a method of gas turbine engine component inspection according to the present invention.

### DETAILED DESCRIPTION

The present invention, in general, provides a method for inspecting a disk-like component for reverse engineering purposes. The present invention has particular applicability to reverse engineering rotor disks for gas turbine engines where nominal data and tolerances are unknown. As used herein, the term "reverse engineering" is meant to encompass the design and production of both slavish copies of existing components as well as copies that may incorporate one or more changes or improvements over existing components (this latter process is sometimes called "re-engineering"). The method of the present invention can include establishing a plurality of datums (e.g., three datums) for providing a local coordinate system, manually verifying measurement apparatus indexing relative to probe locations on a rotor disk and the local coordinate system to reduce a risk of invalid data collection due to invalid probe contact with that rotor disk, and then programming coordinate measuring machine (CMM) probing of the primary rim slot along a plurality of scan lines that are substantially parallel to each other. Probing data can be obtained from probing of a plurality of sample rotor disks with a CMM. Dimension data can be generated as a function of average values of CMM probing data for the plurality of sample rotor disks, and tolerance data can be generated as a function of dimension data value ranges for the plurality of sample rotor disks.

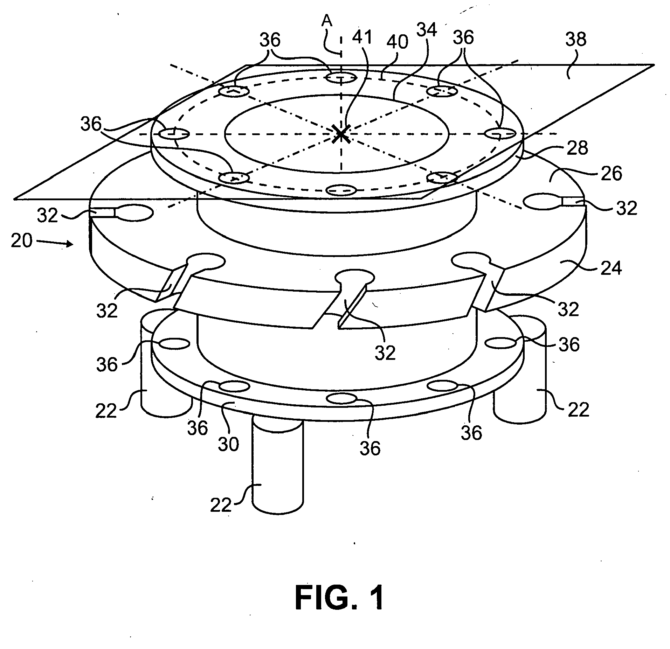

FIG. 1 is a perspective view of an exemplary gas turbine engine rotor disk 20 positioned on a number of supports 22. The disk 20 can be a component desired to be reverse engineered, where limited data regarding the disk 20 is available. For instance, nominal data and tolerances can be unknown for the disk 20. Some data for the disk 20 may be available, such as advanced topographical optical scan (ATOS) data. However, such ATOS data is generally insufficient to establish nominal data and tolerances for the reverse engineering of precision gas turbine engine components like the rotor disk 20. The disk 20 includes a rim 24, a web 26, first and second flanges 28 and 30, a number of slots (collectively identified by reference number 32) in the rim 24, a central bore 34, and a number of holes 36 (e.g., bolt holes) in the flanges 28 and 30. The disk 20 is positioned on the supports 22 to enable inspection using a CMM system, of which the supports 22 can be a part. The CMM system can be of a type well-known in the art, and preferably allows measurements accurate to within 0.0254 millimeter (0.001 inch) or less, more preferably within 0.01016 millimeter (0.0004 inch) or less, and most preferably within 0.00508 millimeter (0.0002 inch) or less. The first and second flanges 28 and 30 of the disk 20 can correspond to forward and aft flanges, respectively, or vice-versa. The slots 32 are configured to accept and retain correspondingly-shaped roots of blades or vanes.

According to the present invention, a number of datums can be established for the disk 20 to enable the creation of a local coordinate system and the collection of reverse engineering data. A primary datum 38, which is a planar datum acting as an axial reference, is established for the disk 20 with the CMM system by suitable probing, which can be conducted manually. The primary datum 38 can be established at an outer face of one of the flanges 28 or 30 (the first flange 28 is used in the illustrated embodiment) using the CMM system.

A secondary datum 40, which acts as a radial or diameter reference, is also established for the disk 20 by suitable probing with the CMM system. As shown in the illustrated embodiment, the secondary datum 40 is defined within the plane of the primary datum 38, and with respect to the radial locations of the holes 36 in the first flange 28. More particularly, the secondary datum 40 can be established with respect to the locations of the centers of the holes 36, which can be calculated using software of the CMM system. In an alternative embodiment, the secondary datum 40 can be established with respect to an inner diameter surface of the bore 34 or a snap surface of the disk 20. This alternative manner for establishing the secondary datum 40 can be used, for example, with rotor disks that lack holes on a flange like those illustrated with the disk 20. In either embodiment, the CMM system is used to establish the secondary datum 40 about a center of origin 41 (or calculated center). The location of the center of origin 41, where a center axis A of the disk 20 intersects the plane of the primary datum 38, can be calculated using software of the CMM system after probing the holes 36, the bore 34, a snap surface, etc.

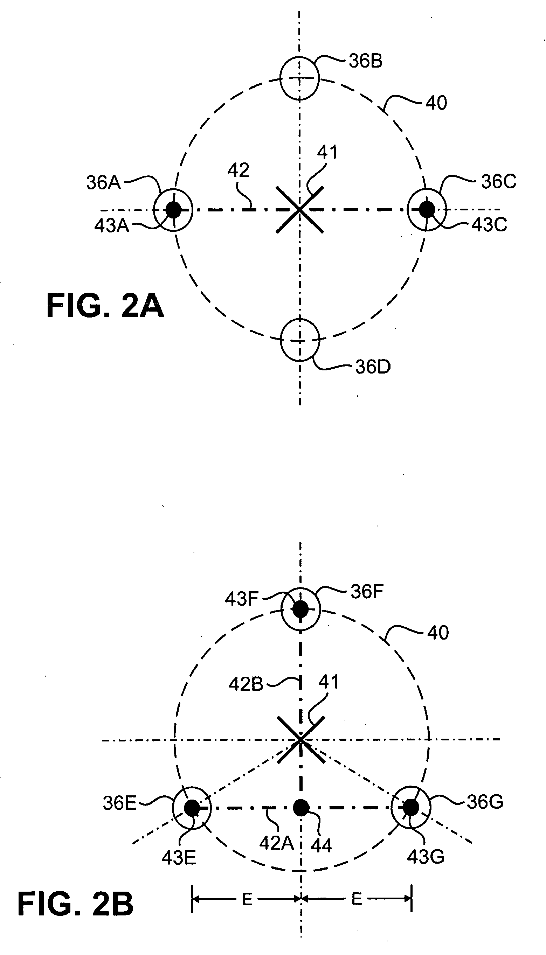

A tertiary datum 42, which acts as a clocking (or angular orientation) reference, is also established for the disk 20 with CMM system probing. FIGS. 2A and 2B are schematic views showing alternative procedures for establishing the tertiary datum 42. If the disk 20 has an even number of equally spaced holes 36, the procedure illustrated in FIG. 2A can be used to establish the tertiary datum 42. Four holes 36A-36D are shown in FIG. 2A, and the tertiary datum 42 is established by a line connecting centers 43A and 43C of the holes 36A and 36C, respectively. In a manner similar to that used to establish the center of origin 41, the centers of the holes 36 can be calculated using software of the CMM system after points on an inner diameter surface of the holes 36 are probed. An operator can then verify whether the tertiary datum 42 passes through the center or origin of the secondary datum 40. It should be noted that the tertiary datum can be parallel to a diameter through the center of origin 41 in some instances. The particular pair of opposed holes 36 selected for establishing the tertiary datum can be chosen for their proximity to a reference feature on the disk 20, such as a timing mark or part number markings located adjacent to one of the selected holes 36.

If the disk 20 has an odd number of evenly-spaced holes, the procedure illustrated in FIG. 2B can be used to establish the tertiary datum 42. Three equally spaced holes 36E-36G are shown in FIG. 2B. In this alternative embodiment, the tertiary datum 42 is established with respect to a first reference line 42A between two center points 43E and 43G of holes 36E and 36G, respectively, and a second reference line 42B that intersects both the center or origin 41 of the secondary datum 40 and a center point 43F of the hole 36F. It is verified that the point 44 where the first and second reference lines 42A and 42B intersect is at the midpoint of the first reference line 42A, that is, that the point 44 is spaced a distance E from each of holes 36E and 36G.

In a still further alternative embodiment, the tertiary datum 42 can be established with respect to an offset hole among a set of otherwise equally spaced holes, which is a method sometimes used to provide a clocking reference point. In this embodiment, the tertiary datum can be established between the center of origin 41 and a center point of the offset hole.

Together the primary, secondary and tertiary datums 38, 40 and 42 can be used to establish a local coordinate system for inspection and reverse engineering purposes. Data collection with the CMM system can be referenced against the local coordinate system or any of the individual datums 38, 40 and 42.

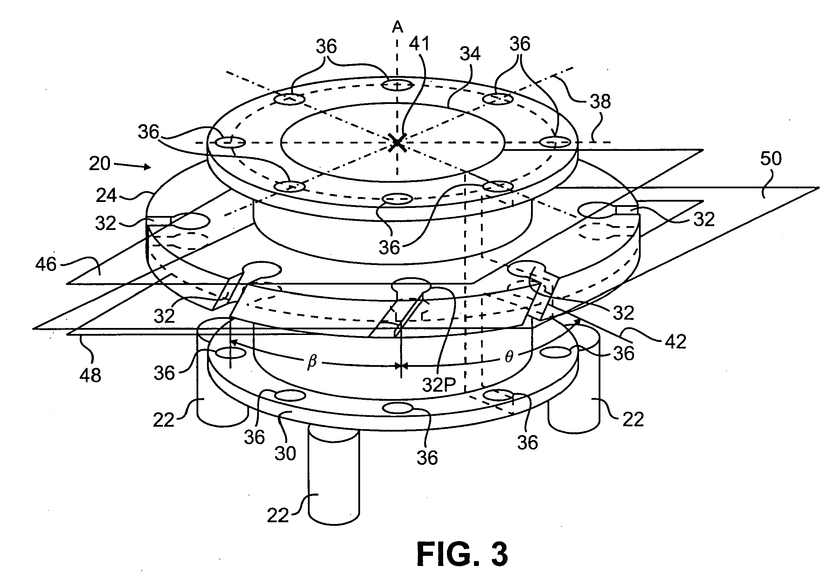

Next, as shown in the perspective view of FIG. 3, CMM probing is conducted to establish forward and aft faces 46 and 48 of the rim 24 of the disk 20. It should be noted that in FIG. 3 the primary datum 38 is identified merely with reference to a pair of lines contained in the datum plane, for simplicity and clarity. When the forward and aft faces 46 and 48 of the rim 24 have been established, software of the CMM system can calculate a P-plane 50 (or midplane P), which is defined as a plane mid-way between the forward and aft faces 46 and 48.

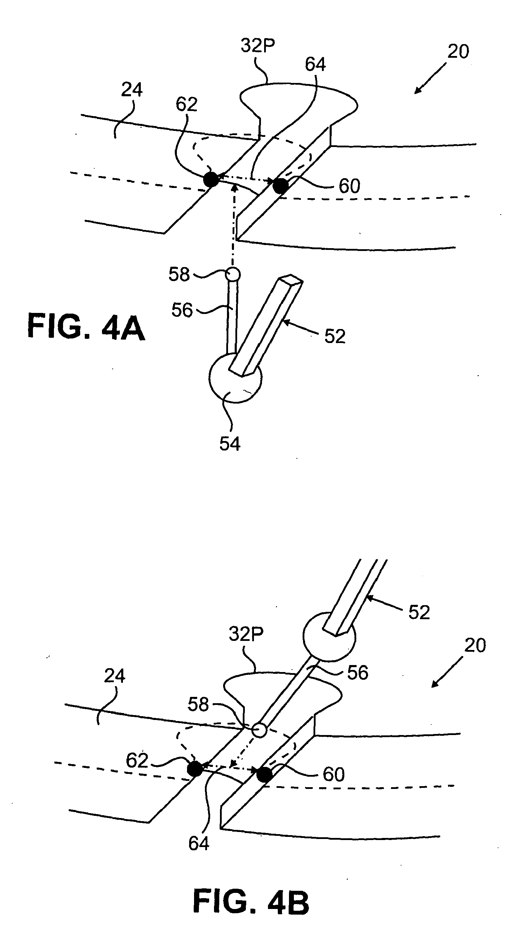

An angular location θ of a primary slot 32P relative to the tertiary datum 42 is then determined, and CMM probing of the primary slot 32P is conducted at the P-plane 50. FIGS. 4A and 4B are perspective views of a portion of the gas turbine engine rotor disk 20 and exemplary CMM probes 52, illustrating alternative probing techniques. The probe 52 includes a joint 54, a shaft 56 extending from the joint 54, and a sensing tip 58 at a distal end of the shaft 56. The shaft 56 can be articulated about the joint 54 to position the sensing tip 58 as desired for probing. A typical CMM system probe can rotate 360° about a vertical axis and about 210° about a horizontal axis, such that the probe can be indexed at 7.5° intervals and move at most about 15° above a horizontal plane. These indexing and range of motion limitations present a risk, because of the geometries of the slots 32, that insertion of a probe 52 into a slot 32 will allow the probe shaft to contact a portion of the disk 20 (called "shanking out") and thereby prevent or disrupt proper probing contact at the probe's sensor tip 58. Absent preventive or mitigating steps, probing of any of the slots 32, including the primary slot 32P, poses a risk of invalid data collection, such as when "shanking out" of a CMM probe occurs.

As shown in FIG. 4A, the probe 52 can approach the primary slot 32P of the disk 20 in a generally radial direction. In this embodiment, the CMM system can be operated manually, and the probe 52 can have a relatively short probe shaft 56. This embodiment is useful where nominal geometry of the primary slot 32P is unknown.

In an alternative embodiment shown in FIG. 4B, the probe 52 can approach the primary slot 32P of the disk 20 approximately along a slash angle of the primary slot 32P. For example, if the primary slot 32P was configured to extend parallel to the axis A of the disk 20 (see FIGS. 1 and 3), the probe 52 can approach the primary slot 32P parallel to the axis A. This embodiment can be used when some nominal geometry information is available beforehand, such as from a computer model or from CMM system modeling, to enable determination or estimation of a suitable approach angle for the probe 52.

In all embodiments, the probe 52 is used to probe at least two points 60 and 62 in the P-plane 50 at opposite sides of the primary slot 32P. Software of the CMM system can then be used to calculate a center point 64 of the primary slot 32P. The center point 64 of the primary slot 32P can be used to verify the angular location θ of the primary slot 32P relative to the tertiary datum 42. Furthermore, probing of the primary slot 32P can be used to verify location of the P-plane 50 (e.g., relative to the primary datum 38). Verification at this stage can include consultation with design engineers.

Next, where the disk 20 has equally spaced slots 32, angular spacing β between slots is determined, according to the formula: 360° divided by the total number of slots 32. It should be noted that slot location information derived from the angular spacing β can be provided in polar or Cartesian coordinates.

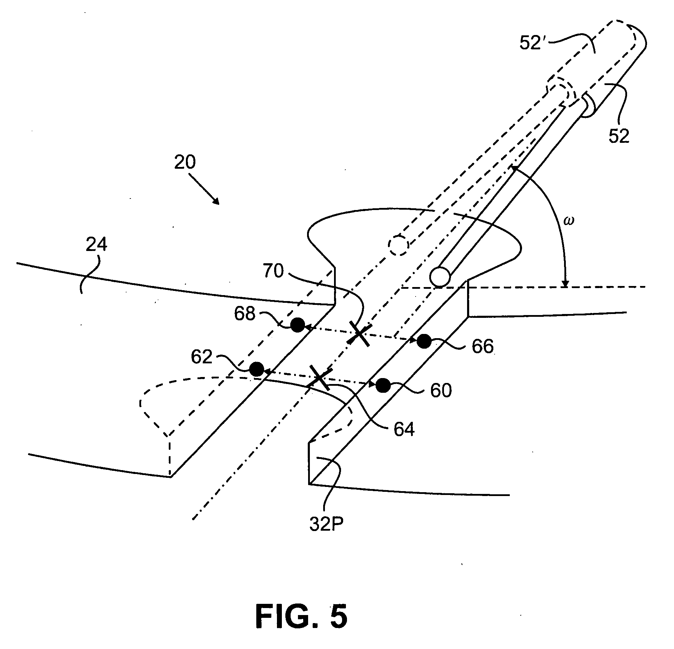

Additional probing data is collected for the primary slot 32P using the CMM system. FIG. 5 is a perspective view of a portion of the disk 20 and the probe 52, with movement of the probe 52 illustrated by a probe location 52' shown in phantom. At least two additional points 66 and 68 are probed within a plane that is parallel to the P-plane 50. Software of the CMM system can then calculate a second center point 70 of the primary slot 32P. A slash angle ω can be determined for the primary slot 32P relative to a line that passes through the center points 64 and 70. A conical angle can also be determined for the primary slot 32P in a manner similar to that for the slash angle ω.

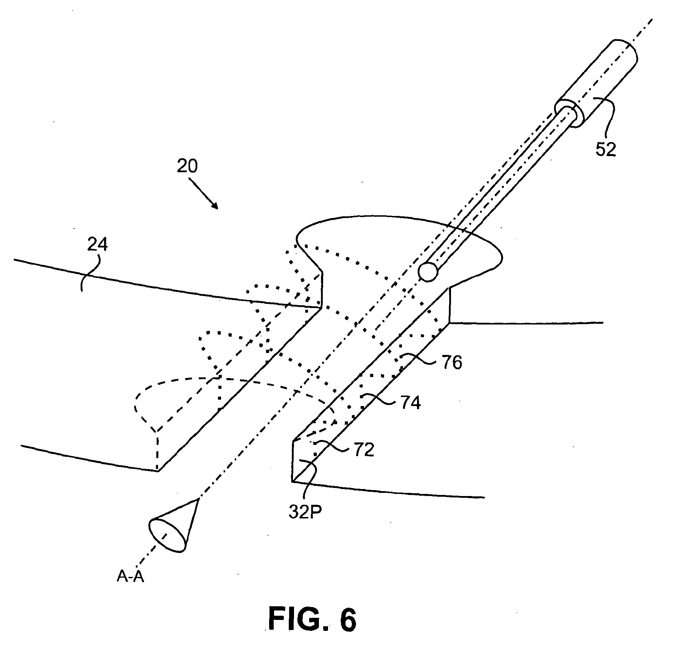

Once preliminary information about the disk 20 has been collected as described above, coordinate data establishing the precise configuration of the slits 32 can be collected. The preliminary data allows indexing of the probe 52 to be verified relative to the slots 32 (e.g., relative to the slash angle ω of the slots 32), in order to reduce a risk of invalid data collection. FIG. 6 is a perspective view of a portion of the disk 20 and the probe 52, illustrating data collection procedures. Scans of the primary slot 32P are then conducted using the probe 52. Typically, scans are conducted along at least two scan lines, such as along three scan lines 72, 74 and 76, which are arranged parallel to each other and spaced apart along an axis A-A that is arranged at the slash angle ω. For each scan line 72, 74 and 76, probing is conducted along a path designated by that scan line with equal 0.127 millimeter (0.005 inch) or less spacing between adjacent probing points. One of the scan lines, such as scan line 74, is typically in the P-plane 50, and the other scan lines are equally spaced from the P-plane 50 at desired locations. Probing for data collection along the scan lines 72, 74 and 76 can be conducted utilizing programming software of the CMM system to control movement of the probe 52. After data is obtained for the primary slot 32P, similar probing data is collected along similar scan lines for others of the slots 32. A plurality of slots 32 are typically probed, such as by selecting a representative number of the slots 32 equally spaced about the disk 20 (e.g., all those located at about 45° apart from each other). The procedures for probing other slots 32 can be substantially similar to those described above with respect to the primary slot 32P. These measurements allow determination of nominal characteristics for the slots 32 of the disk 20, including profile, true position, run out and flatness relative to the three datums 38, 40 and 42 previously established.

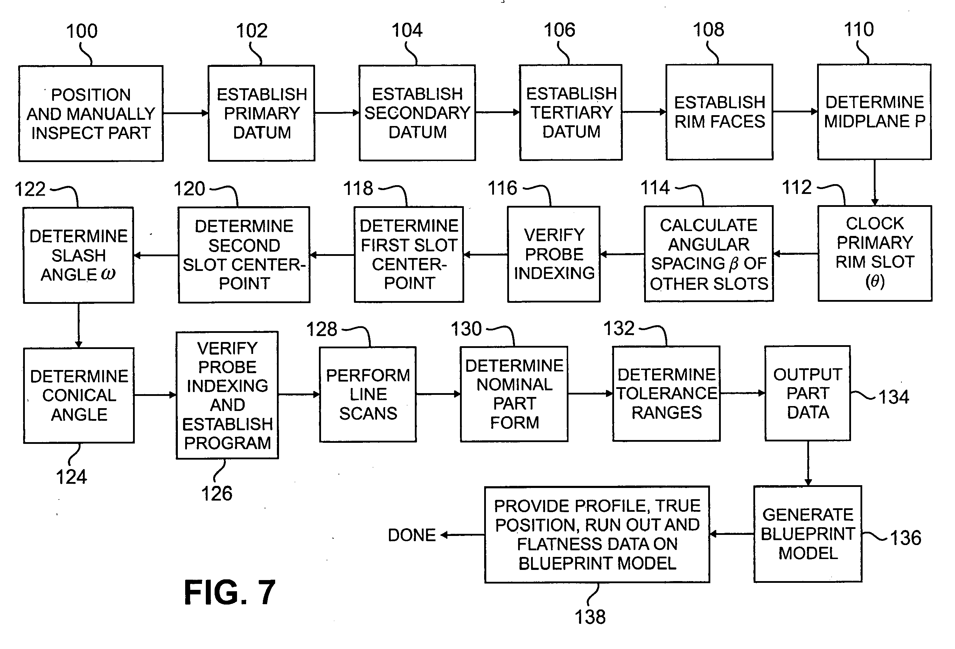

FIG. 7 is a flow chart that summarizes the present method of gas turbine engine component inspection. In the illustrated embodiment, an initial step is for an operator to position and manually inspect the disk 20 (step 100). In step 100, manual inspection can include reviewing the disk 20 with protractors, calipers, a rotary table, etc. ATOS data can also be captured at step 100 to facilitate generation of a computer model of the disk 20, dimensions gather using ATOS techniques is generally insufficient when reverse engineering gas turbine engine rotor disks. The disk 20 is then ultimately positioned on supports 22 for inspection with the CMM system.

Next, the primary datum 38 is established (step 102). Probing of at least three points, and preferably at least twelve points, at a face of the first flange 28 can be used to establish the primary datum 38. The secondary datum 40 is then established with respect to the primary datum 38 (step 104). In establishing the secondary datum 40 with holes 36, at least four points on an inner surface of at least two of the holes 36 are probed, or, where a flange-to-diameter ratio is greater than 2.0, at least eight points can be probed per hole 36. Where the bore 34 or a snap surface is used to establish the secondary datum 40, at least twelve points are probed at each of two axially spaced sections of an inner diameter surface. Subsequently, the tertiary datum 42 is established (step 106). Some alternative tertiary datum establishment procedures are described above. The three datums 38, 40 and 42 can be established according to the procedures described above. These datums 38, 40 and 42 allow a local coordinate system to be established through the inspection process.

The forward and aft rim faces 46 and 48 are then established (step 108), and the P-plane 50 (or midplane P) is established (step 110). The primary slot 32P in the rim 24 is then clocked, establishing angular location θ relative to the tertiary datum 42 (step 112). The angular spacing β of all of the equally spaced slots can then be calculated, for example, using the equation provided above (step 114). With the completion of steps 100-114, CMM probe 52 indexing can then be verified to reduce a risk of invalid data collection (e.g., shanking out). The primary slot is then probed to determine its first and second center points 64 and 70 (steps 118 and 120 respectively). With the first and second center points 64 and 70 determined, the slash angle ω and the conical angle of the slots 32 can then be determined (steps 122 and 124 respectively).

Probing in the foregoing steps can be performed manually. At step 126, indexing of the probe 52 can be verified and a more automated probing program can be established using conventional programming software of the CMM system for performing subsequent probing. Without data gathered with the non-programmed data acquisition procedures in the earlier steps described above, later CMM programming would present significant problems for an operator that has no dimensioned drawing or model against which a CMM program can be established. To the extent that such an operator could proceed, the risk of invalid data acquisition would be high, and, if non-programmed manual probing were continued, the inspection process would be highly time-consuming.

According to CMM programming, line scans 72, 74 and 76 of the primary slot 32P are performed (step 128). Also as part of step 128, lines scans 72, 74 and 76 of a plurality of the other slots 32 are performed. For example, line scans 72, 74 and 76 of eight or more, or 16 or more of the slots 32 are performed at equally spaced positions about the axis A of the disk 20. The line scans 72, 74 and 76 of all of the selected slots 32 are considered representative of all the slots. However, in alternative embodiments, all slots 32 of the disk 20 could be scanned. It should be noted that the particular slots selected, the number of slots selected, and the locations of the selected slots can vary as desired. Moreover, additional probing of the sample parts to obtain additional data can be performed, for instance, gathering data from locations other than at the slots 32.

Once all line scans for the disk 20 have been performed, other sample disks of the same type as the disk 20 can be positioned for scanning by the CMM system in the same manner as for the disk 20. In this way, the programmed line scans 72, 74 and 76 can be repeated using the CMM system program established for the disk 20 to obtain data from a number of different sample parts as part of step 128, for instance, gathering line scan data from seven or more additional sample disks. By obtaining data from multiple parts, possible tolerance variations, defects, or other that may arise on a part-by-part basis can be accounted for, and a risk of collected reverse engineering data varying significantly from the unknown original part design specifications is thereby reduced.

The resultant data set from scans of all sample parts is collected and stored. A nominal part form can be determined by averaging (e.g., finding an arithmetic mean) of the resultant data set (step 130). In addition, tolerance ranges can be established from the resultant data that compiles data subsets for individual parts in the sample set (step 132).

Part data can then be output for storage or display (step 134). The output data can include identification of the primary, secondary and tertiary datums 38, 40, and 42, respectively, and characteristics for reverse engineering such as profile, true position, run out and flatness relative to the three datums 38, 40 and 42. A "blueprint" model for reverse engineering can be generated from the output part data (step 136). The blueprint model is not limited to hard copies of relevant information, but, for example, can be a electronic model. The blueprint model can include desired dimensioned drawings, identification of relevant datums, tolerances and other manufacturing specifications, and any further information useful for reverse engineering purposes. For example, profile, true position, run out and flatness relative to the three datums 38, 40 and 42 can be provided on the blueprint model (step 138). Subsequently, reverse engineered parts can be manufactured according to the blueprint model.

It should be recognized that the present invention provides a systematic approach to inspection of rotor disks for gas turbine engines for reverse engineering purposes. Nominal values and tolerances of a part can be determined even when inspection of sample parts begins with that data being unknown. Moreover, initial probing and inspection steps according to the present invention can allow a CMM program to be developed while also reducing the risk of invalid data collection. Due to the relatively tight tolerances present on gas turbine engine disks, especially for slots in disk rims, high requirements and demands are placed on reverse engineering methods, rendering some possible alternative techniques unsuitable. For instance, ATOS data alone generally lacks suitable precision in establishing nominal and tolerance data for disk slots.

Although the present invention has been described with reference to preferred embodiments, workers skilled in the art will recognize that changes may be made in form and detail without departing from the scope of the invention, which is defined by the claims and their equivalents. For instance, particular steps for the present inspection method can vary according to the particular configuration of the part being inspected. Moreover, additional steps not mentioned can be performed, and undesired steps can be omitted for certain applications.

## Claims

1. A method of inspecting gas turbine engine rotor disks (20) for reverse engineering, the method comprising:
establishing a plurality of datums (38, 40, 42) for providing a local coordinate system;
establishing rim face data relative to the first datum (38);
clocking a primary rim slot relative to the third datum (42);
manually verifying coordinate measuring machine probe indexing relative to probe locations on a rotor disk;
programming coordinate measuring machine probing of the primary rim slot (32P) along a plurality of scan lines (72, 74, 76) that are substantially parallel to each other, wherein the coordinate measuring machine probing is programmed as a function of the manually verified coordinate measuring machine probe indexing;
obtaining coordinate measuring machine probing data from coordinate measuring machine probing of a plurality of sample rotor disks (20);
outputting dimension data as a function of average values of coordinate measuring machine probing data for the plurality of sample rotor disks; and
outputting tolerance data as a function of dimension data value ranges for the plurality of sample rotor disks.

2. The method of claim 1, wherein the step of establishing a plurality of datums comprises:
establishing a first datum (38) defined as an axial plane;
establishing a second datum (40) defined as a radial dimension relative to a point of origin, wherein the second datum is located within the axial plane of the first datum; and
establishing a third datum (42) defined as a clocking reference position.

3. The method of claim 2, wherein the first datum (38) is established at a flange (28, 30) of the rotor disk (20).

4. The method of claim 2 or 3, wherein the second datum (40) is established at a radial location of a pattern of bolt holes (36) in a flange relative to a central point of origin (41), and preferably wherein a minimum of four data points are collected for each bolt hole probed to establish the second datum.

5. The method of claim 2 or 3, wherein the second datum (40) is established at a radial location of an inner diameter surface of at least one of a central bore (34) or snap surface relative to a central point of origin, and preferably wherein a minimum of twelve data points are collected to establish the second datum.

6. The method of claim 2, 3, 4 or 5, wherein the third datum (42) is aligned relative to a feature selected from the group consisting of an offset feature and part markings.

7. The method of any of claims 2 to 6, wherein the third datum (42) is established with respect to a reference line between two opposite bolt holes (36A, C), wherein the reference line (42B) for the third datum passes through a calculated center of the second datum.

8. The method of any of claims 2 to 6, wherein the third datum (42) is established with respect to a first reference line (42A) between two bolt holes (36E, G) and a second reference line (42B) that intersects both a calculated center (41) of the second datum and a center point of another bolt hole (36F).

9. The method of any of claims 2 to 8 and further comprising:
determining nominal form of the plurality of sample rotor disks relative to the first, second and third datums for profile, true position, run out and flatness.

10. The method of any preceding claim, wherein the step of programming coordinate measuring machine probing of the primary rim slot comprises establishing a plurality of measurement points spaced 0.127 millimeters (0.005 inches) apart along each scan line.

11. The method of any preceding claim and further comprising:
determining a first center point (64) of the primary rim slot (32P) in a midplane *P*;
determining a second center point (70) of the primary rim slot in a plane parallel to the midplane *P*;
establishing a reference line connecting the first center point and the second center point; and
measuring a slot slash angle (ω) between the reference line and at least one of the plurality of datums.

12. The method of any preceding claim and further comprising the step of:
calculating rim slot angular spacing (β) relative to the primary rim slot as a function of 360° divided by a total number of rim slots (32).

13. The method of any preceding claim, wherein data point measurements of the coordinate measuring machine probing data are accurate to at least 0.0254 millimeters (0.001 inches).

14. The method of any preceding claim and further comprising:
determining a slot conical angle relative to at least one of the plurality of datums.

15. A reverse engineering part information data set for a part of unknown nominal and tolerance characteristics, the data set comprising:
a first datum defined as an axial plane relative to a flange of a rotor disk for a gas turbine engine;
a second datum defined as a radial dimension relative to a point of origin, wherein the second datum is located within the axial plane of the first datum;
a third datum defined as a clocking reference position;
part coordinate data points for turbine blade attachment slots each measured to at least 0.0254 millimeters (0.001 inches) accuracy with respect to the first, second and third datums; and
a blueprint model of the part that identifies the first, second and third datums as well as nominal part configuration data and part tolerance data, both empirically determined as a function of the part coordinate data points.
